# EUROPÄISCHE PATENTSCHRIFT

(11) **EP 2 369 124 B1**
(45) Veröffentlichungstag und Bekanntmachung des Hinweises auf die Patenterteilung: **07.01.2015**
(21) Anmeldenummer: 11001852.0
(22) Anmeldetag: 05.03.2011
(51) Int. Cl.: E06B 9/68, H02H 7/085, H02P 25/04

(54) **Rohrmotorsteuerung für eine Verdunkelungseinrichtung**
Tubular drive control for a shading device
Commande de moteur tubulaire pour un dispositif d'occultation

(30) Priorität: 05.03.2010 DE 202010003272 U
(43) Veröffentlichungstag der Anmeldung: 28.09.2011
(73) Patentinhaber: ARCA Beteiligungen GmbH, 46414 Rhede (DE)
(72) Erfinder: Tepasse, Johannes, Dipl.-Ing., 46414 Rhede (DE)
(74) Vertreter: Gottschald, Jan

(56) Entgegenhaltungen:
- DE-A1- 4 440 449
- DE-A1-102005 038 517

## Beschreibung

Die vorliegende Erfindung betrifft ein Steuergerät zur Hausinstallation für die drahtgebundene Fernsteuerung der Antriebsanordnung einer Verdunkelungsvorrichtung bzw. Sicherungsvorrichtung gemäß dem Oberbegriff von Anspruch 1 sowie eine Steuerung einer Antriebsanordnung für eine Verdunkelungsvorrichtung bzw. Sicherungsvorrichtung gemäß dem Oberbegriff von Anspruch 10.

Das in Rede stehende Steuergerät findet im Rahmen der Hausinstallation in erster Linie für die drahtgebundene Fernsteuerung von Rohrmotoranordnungen Anwendung. Dieser Anwendungsfall steht vorliegend im Vordergrund, was nicht beschränkend zu verstehen ist.

Das bekannte Steuergerät (Produktbeschreibung "Troll" der Rademacher Geräte-Elektronik GmbH & Co. KG, 2009) dient unter anderem der angesprochenen drahtgebundenen Fernsteuerung von Rohrmotoranordnungen. Mit "drahtgebundener Fernsteuerung" ist vorliegend gemeint, dass die Verbindung zwischen dem Steuergerät und der Antriebsanordnung drahtgebunden ist. Dies schließt nicht aus, dass das Steuergerät selbst über eine Funkfernsteuerung fernsteuerbar ist.

Das bekannte Steuergerät ist ausgelegt für den Betrieb eines asynchron-Antriebsmotors mit Netzwechselspannung. Hierfür ist der Antriebsmotor in üblicher Weise mit einem Betriebskondensator zur Erzeugung von Hauptphase und Hilfsphase ausgestattet.

Das Steuergerät ist an die Netzwechselspannung angeschlossen und weist eine elektronische Umschalteinheit auf, mit der sich der Phasenleiter L1 der Netzwechselspannung je nach gewünschter Verstellrichtung auf eine der beiden Phasenklemmen des Antriebsmotors durchschalten lässt. Damit lassen sich insbesondere Rohrmotoren, die keine eigene Elektronik aufweisen und letztlich endschaltergesteuert sind, auf für den Benutzer komfortable Weise steuern.

Das bekannte Steuergerät überzeugt durch seinen einfachen Aufbau und die daraus resultierende Robustheit. Der aus dem grundsätzlichen Aufbau heraus erzielbare Funktionsumfang ist mit dem bekannten Steuergerät aber bei weitem nicht ausgeschöpft.

Ein bekanntes Steuerungskonzept (DE 10 2005 038 517 A1) sieht beispielweise vor, die zu bestimmten Zeitpunkten vorliegenden Phasen- und Amplitudendifferenzen zwischen Haupt- und Hilfsphase eines asynchron-Antriebsmotors auszuwerten, um das jeweilige Antriebsmoment zu ermitteln. Allerdings hat sich diese Funktionserweiterung trotz zahlreicher Maßnahmen zur Mittelwertbildung als nicht besonders robust gegen Störungen in der Netzwechselspannung erwiesen.

Weiterhin geht ein Steuerungsverfahren aus DE 4440449 A1 hervor.

Der Erfindung liegt das Problem zugrunde, das bekannte Steuergerät derart auszugestalten und weiterzubilden, dass dessen Funktionsumfang erweitert wird.

Das obige Problem wird bei einem Steuergerät gemäß dem Oberbegriff von Anspruch 1 durch die Merkmale des kennzeichnenden Teils von Anspruch 1 gelöst.

Eine an sich bekannte Überlegung besteht hier zunächst darin, dass aus der Hilfsphasenspannung grundsätzlich ein Drehmomentwert für das vom Antriebsmotor abgegebene Drehmoment ermittelt werden kann, der im Hinblick auf das Auslösen einer Kollisionsroutine überwacht werden kann. Alle Spannungsangaben beziehen sich vorliegend auf die jeweilige Spannung gegenüber dem Neutralleiter.

Wesentlich für die vorschlagsgemäße Lösung ist nun die Erkenntnis, dass an der Umschalteinheit alle für die Ermittlung des Drehmomentwertes erforderlichen Informationen, nämlich die Informationen über die Hilfspbasenspannung, systemimmanent vorliegen. Entsprechend wird vorgeschlagen, dass die Umschalteinheit eine elektronische Auswerteeinheit aufweist, die aus der Hilfsphasenspannung einen obigen Drehmomentwert ermittelt und bei Abweichung von einem vorbestimmten Verhalten des Drehmomentwerts eine Kollisionsroutine auslöst, die vorzugsweise eine Abschaltung des Antriebsmotors im Kollisionsfall bewirkt. Gegebenenfalls kann in diese Ermittlung auch die Hauptphasenspannung eingehen, die regelmäßig ebenfalls an der Umschalteinheit verfügbar ist.

Mit der vorschlagsgemäßen Lösung lässt sich insbesondere bei Rohrmotoren, die keine eigene Elektronik aufweisen und endschaltergesteuert sind, auf einfache Weise eine Drehmomentüberwachung realisieren. Besonders vorteilhaft dabei ist die Tatsache, dass eine Nachrüstung bereits installierter Rohrmotoren mit der Zusatzfunktion der Drehmomentüberwachung bei minimalem Aufwand möglich ist.

Es sind verschiedene Varianten für die Ermittlung des Drehmomentwerts denkbar. Dabei ist darauf hinzuweisen, dass der Drehmomentwert regelmäßig nicht das absolute Drehmoment repräsentiert, sondern lediglich ein Maß für das Drehmoment darstellt.

Bei der Ermittlung des Drehmomentwerts ist vor allem darauf zu achten, dass regelmäßig auftretende Störungen der Netzwechselspannung nicht zu einem ungewünschten Auslösen der Kollisionsroutine führen. Hier hat sich die vorschlagsgemäße Lösung als besonders vorteilhaft herausgestellt. Bei der Ermittlung des Drehmomentwerts werden hier nicht die Zeitwerte der Hauptphasenspannung und der Hilfsphasenspannung als solche herangezogen, sondern periodisch ein erster Flächenwert über eine Halbwelle der Hauptphasenspannung und ein zweiter Flächenwert über die dazugehörige, phasenverschobene Halbwelle der Hilfsphasenspannung. Die Flächenwerte stellen dabei ein Maß für die Fläche der jeweiligen Halbwellen bereit. Grundsätzlich lässt sich so aus jedem Paar von Flächenwerten ein entsprechender Drehmomentwert und im Ergebnis eine Folge von Drehmomentwerten erzeugen. Es ist offensichtlich, dass damit der Einfluss von Störungen durch Rauschen auf den resultierenden Drehmomentwert reduziert ist.

Die obige Nutzung von Flächenwerten für die Ermittlung des Drehmomentwerts ist Gegenstand einer eigenständigen Lehre gemäß Anspruch 10. Diese weitere Lehre betrifft die Steuerung einer Antriebsanordnung, wobei es auf die Eignung zur Hausinstallation sowie die Existenz einer Umschalteinheit nicht notwendigerweise ankommt. Alle Ausführungen zu dem vorschlagsgemäßen Steuergerät gelten insoweit auch für die Steuerung nach dieser weiteren Lehre.

Besonders interessant für beide vorschlagsgemäßen Lehren sind die Ausgestaltungen gemäß den Ansprüchen 3 bis 6, die verschiedene Varianten der Ermittlung und Berücksichtigung des Drehmomentwerts betreffen.

Bei der besonders bevorzugten Ausgestaltung gemäß Anspruch 3 ist eine Normierung der Differenz aus beiden Flächenwerten auf den ersten, der Hauptphasenspannung zugeordneten Flächenwert vorgesehen. Damit lassen sich Störungen, die sich durch einen Faktor der nominellen Netzwechselspannung beschreiben lassen, gewissermaßen "wegkürzen".

Die weiter bevorzugten Ausgestaltungen gemäß den Ansprüchen 4 und 5 betreffen die Nutzung eines insbesondere gleitenden Mittelwerts des Drehmomentwerts, um das Auslösen der Kollisionsroutine durch eine dynamische Kollisionssituation (Anspruch 4) und durch eine sich vergleichsweise langsam entwickelnde Kollisionssituation (Anspruch 5) zuverlässig zu gewährleisten.

Eine dynamische Kollisionssituation besteht beispielsweise beim plötzlichen Blockieren eines Rolladens durch ein Hindernis. Eine sich langsam entwickelnde Kollisionssituation geht dagegen beispielsweise auf ein zunehmendes Verklemmen des Rolladens durch eine Verschmutzung der zugeordneten Führungen zurück. Beide Fälle lassen sich mit der vorschlagsgemäßen Lösung zuverlässig erfassen.

Im Folgenden wird die Erfindung anhand eines in der Zeichnung dargestellten Ausführungsbeispiels näher erläutert. In der Zeichnung zeigt
- Fig. 1: ein vorschlagsgemäßes Steuergerät zur Hausinstallation, das einer Rohrmotoranordnung zugeordnet ist, im installierten Zustand,
- Fig. 2: die Anordnung gemäß Fig. 1 in einem nur die für die vorschlagsgemäße Lösung wesentlichen Komponenten darstellenden Blockschaltbild und
- Fig. 3: einen beispielhaften zeitlichen Verlauf der Hauptphasenspannung (oben) und der Hilfsphasenspannung (unten) der Anordnung gemäß Fig. 1.

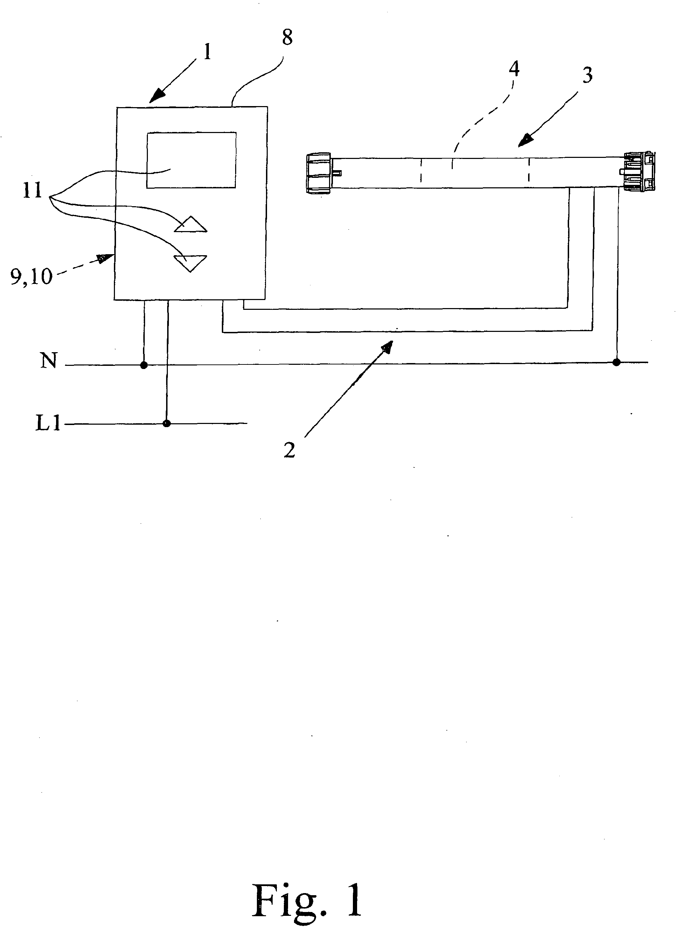

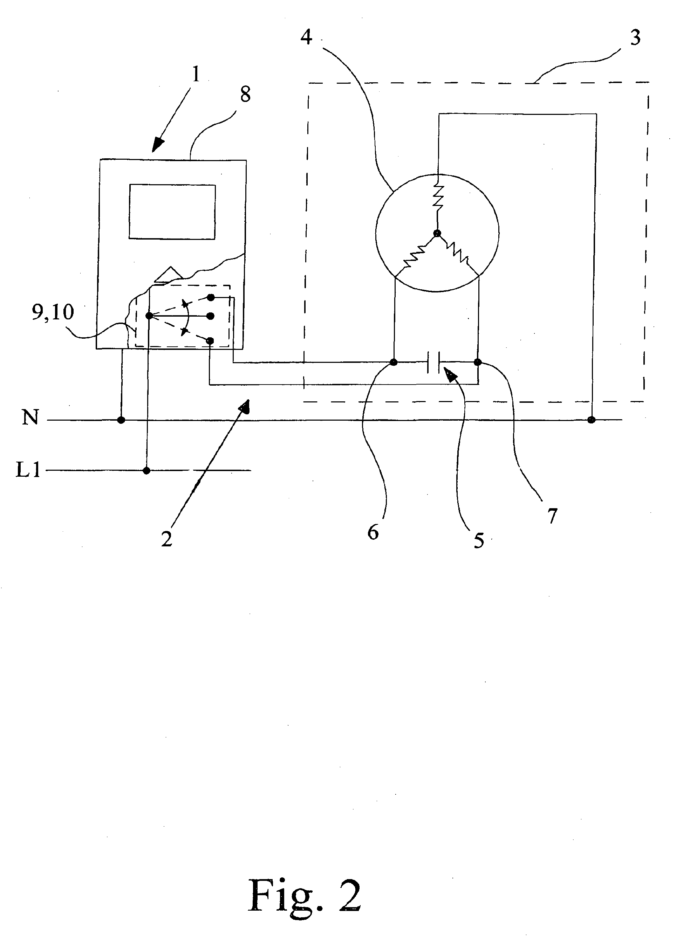

Das in den Fig. 1 und 2 dargestellte Steuergerät 1 ist für die Hausinstallation vorgesehen. Das Steuergerät 1 wird regelmäßig in Aufputzmontage oder in Unterputzmontage installiert.

Mittels des Steuergeräts 1 ist über Verbindungsleitungen 2 die drahtgebundene Fernsteuerung der Antriebsanordnung 3 einer nicht dargestellten Verdunkelungsvorrichtung bzw. Sicherungsvorrichtung vorgesehen. Eine solche Verdunkelungsvorrichtung bzw. Sicherungsvorrichtung ist regelmäßig mit einem verstellbaren Verschlusselement ausgestattet, das mittels der Antriebsanordnung 3 verstellbar ist. Beispiele für ein solches verstellbares Verschlusselement sind Rolläden, Jalousien, Fensterläden, Markisen, Rolltore oder Rollvorhänge. Andere Anwendungsfelder für die vorschlagsgemäße Lösung sind denkbar.

Für die Ausgestaltung der Antriebsanordnung 3 sind ebenfalls zahlreiche Ausgestaltungen denkbar. In besonders bevorzugter Ausgestaltung handelt es sich bei der Antriebsanordnung 3 um eine Rohrmotoranordnung 2.

Die Antriebsanordnung 3 weist einen Asynchron-Antriebsmotor 4 auf, der an Netzwechselspannung betreibbar ist und der hierfür mit einem Betriebskondensator 5 zur Erzeugung von Haupt- und Hilfsphase ausgestattet ist.

In dem dargestellten installierten Zustand ist das Steuergerät 1 hier und vorzugsweise mit der Netzwechselspannung verbunden, während der Antriebsmotor 4 jedenfalls mit seinen beiden Phasenklemmen 6, 7 mit dem Steuergerät 1 verbunden ist.

Die bevorzugte Verbindung des Steuergeräts 1 mit Netzwechselspannung, also mit Phase L1 und Neutralleiter N, ist unter anderem die Spannungsversorgung der noch zu erläuternden Elektronik des Steuergeräts 1 gewährleistet.

Das Steuergerät 1 weist ein Gehäuse 8 und in dem Gehäuse 8 eine elektronische Umschalteinheit 9 auf. Zur Einstellung der einen oder der anderen Drehrichtung des Antriebsmotors 4 schaltet die Umschalteinheit 9 den Phasenleiter L1 der Netzwechselspannung auf eine der beiden Phasenklemmen 6, 7 des Antriebsmotors 4 durch. Bis hierhin entspricht der Aufbau des Steuergeräts 1 dem vorbekannten Stand der Technik.

Wesentlich ist nun, dass die Umschalteinheit 9 eine elektronische Auswerteeinheit 10 aufweist, die aus der Hilfsphasenspannung U_{Hilfs} und vorzugsweise zusätzlich der Hauptphasenspannung U_{Haupt} einen Drehmomentwert für das vom Antriebsmotor 4 abgebebene Drehmoment ermittelt. Wesentlich ist weiter, dass die Auswerteeinheit 10 bei Abweichung von einem vorbestimmten Verhalten des Drehmomentwerts eine Kollisionsroutine auslöst. Dabei entspricht die Hauptphasenspannung U_{Haupt} stets der Spannung der zum Antriebsmotor 3 durchgeschalteten Phase L1 auf der einen Seite 6, 7 des Betriebskondensators 5 und die Hilfsphasenspannung U_{Hilfs} der Spannung auf der der Hauptphase gegenüberliegenden, anderen Seite 7,6 des Betriebskondensators 5.

Das Durchlaufen der Kollisionsroutine bewirkt vorzugsweise jedenfalls ein Abschalten des Antriebsmotors 4 und gegebenenfalls eine zumindest geringfügige Rückstellung des Antriebsmotors 4. Es sind unterschiedliche Möglichkeiten für die Reaktion auf eine eventuell ermittelte Kollision denkbar. Dies hängt insbesondere davon ab, welche Art der Kollision vorliegt. Die Erfassung unterschiedlicher Arten von Kollisionen wird weiter unten noch erläutert.

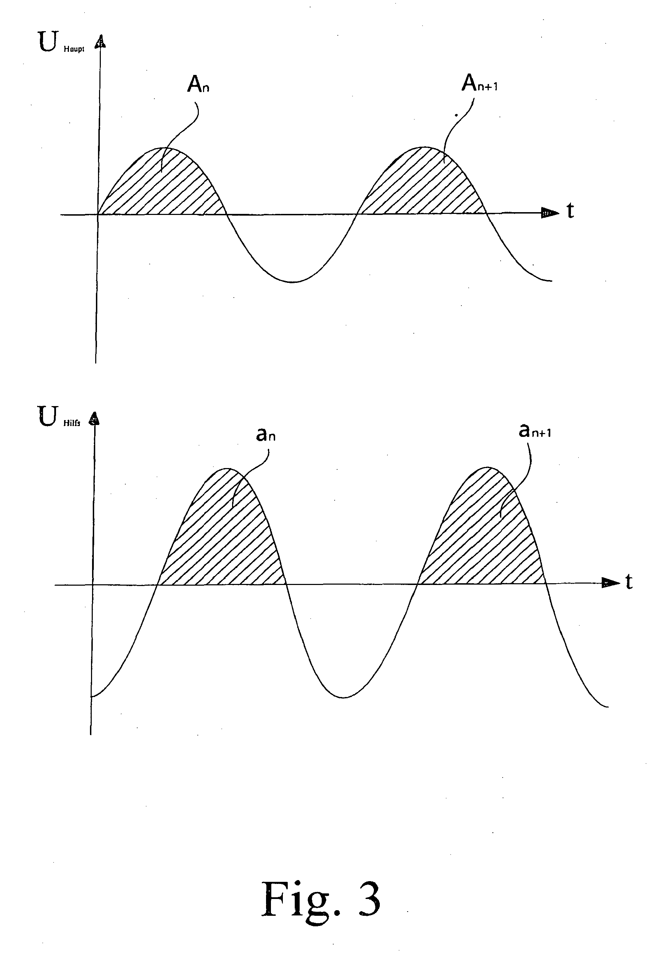

Die vorschlagsgemäße Variante zur Ermittlung des Drehmomentwerts wird im Folgenden anhand der Darstellung in Fig. 3 erläutert.

Zunächst einmal ermittelt die Auswerteeinheit 10 periodisch einen ersten Flächenwert Aₙ über eine Halbwelle der Hauptphasenspannung U_{Haupt} und einen zweiten Flächenwert aₙ über die dazugehörige, phasenverschobene Halbwelle der Hilfsphasenspannung U_{Hilf}. Hier und vorzugsweise handelt es sich bei den Halbwellen ausschließlich um die oberen Halbwellen der jeweiligen Spannung. Die Flächenwerte Aₙ und aₙ sind in Fig. 3 dargestellt, wobei der Index "n" zur Klarstellung eine fortlaufende Nummerierung der hintereinander auftretenden Halbwellen repräsentiert.

Aus den beiden Flächenwerten Aₙ und aₙ wird vorschlagsgemäß der aktuelle Drehmomentwert ermittelt. Hier und vorzugsweise erfolgt die Ermittlung des Drehmomentwerts periodisch, insbesondere zu jeder positiven oder negativen Halbwelle der Haupt- und Hilfsphasenspannung, so dass sich entsprechend eine Folge von Drehmomentwerten ergibt.

Aus der Darstellung in Fig. 3 ergibt sich unmittelbar, dass kleinere dynamische Störungen durch die Ermittlung des Flächenwerts nur noch in relativ geringem Umfange in die Berechnung des Drehmomentwerts eingehen.

Im Einzelnen ist es vorzugsweise so, dass die Auswerteeinheit 10 den ersten Flächenwert Aₙ von dem zweiten Flächenwert aₙ subtrahiert und diese Differenz zu Ermittlung des Drehmomentwerts auf den ersten Flächenwert Aₙ normiert. Das bedeutet nichts anderes, als dass diese Differenz durch den ersten Flächenwert Aₙ dividiert wird. Wie weiter oben erläutert wurde, lassen sich damit bestimmte Störungen in der Netzwechselspannung aus dem Drehmomentwert beseitigen. Dies zusammen mit der Nutzung der obigen Flächenwerte (Aₙ, aₙ) hat in Versuchen zu ganz besonders störungsresistenten Anordnungen geführt.

Weiter vorzugsweise weist die Auswerteeinheit 10 einen gegebenenfalls mehrstufigen, vorzugsweise zweistufigen Filter zur Erzeugung eines insbesondere gleitenden Mittelwerts des Drehmomentwerts auf. Hierdurch wird eine weitere Glättung des Mittelwerts erreicht.

Interessant ist nun die Überlegung, dass die Auswerteeinheit 10 bei einer vorbestimmten Abweichung des jeweils aktuellen Drehmomentwerts von dem erzeugten Mittelwert die Kollisionsroutine auslöst. Die Kollisionsroutine wird also ausgelöst, wenn der Drehmomentwert eine Abweichung von dem Mittelwert aufweist, die eine bestimmte Grenzabweichung überschreitet. Solche Drehmomentwerte werden auch als "Ausreißer" bezeichnet. Hiermit lassen sich die oben beschriebenen, dynamischen Kollisionssituationen schnell erfassen.

Es kann aber auch vorkommen, dass eine Kollision gewissermaßen schleichend auftritt. Dies ist, wie ebenfalls erläutert, beispielsweise das zunehmende Verklemmen eines Rolladens in der zugeordneten seitlichen Führung. Eine solche schleichende Kollision lässt sich vorzugsweise dadurch erkennen, dass die Auswerteeinheit 10 bei einer vorbestimmten Änderung des Mittelwerts die Kollisionsroutine auflöst. Gegebenenfalls kann diese vorbestimmte Änderung auch auf einen vorbestimmten Zeitraum bezogen sein, also die Steigerung des Mittelwerts über der Zeit betreffen.

Regelmäßig ist die Amplitude der Hilfsphasenspannung höher als die Amplitude der Hauptphasenspannung. Mit zunehmendem Drehmoment sinkt die Hilfsphasenspannung ab. In besonders bevorzugter Ausgestaltung ist es entsprechend vorgesehen, dass die Auswerteeinheit 10 bei einem Absinken des zweiten Flächenwerts aₙ unter den ersten Flächenwert Aₙ die Kollisionsroutine auslöst. Das Auslösen der Kollisionsroutine geht also auf einen Vergleich der Hilfsphasenspannung mit der Hauptphasenspannung zurück.

Es wurde schon darauf hingewiesen, dass das Steuergerät 1 in Aufputzmontage und in Unterputzmontage installierbar ist. Im letztgenannten Fall ist es vorzugsweise so, dass das Steuergerät 1 in einer Norm-Unterputzdose installierbar ist, wobei die Abmessungen des Gehäuses 8 in besonders bevorzugter Ausgestaltung der deutschen Industrienorm DIN49075 entsprechen.

Das Steuergerät 1 kann eine Bedieneinheit 11 mit einem Tastenfeld und/oder einem Display aufweisen, über die die Rohrmotoranordnung oder dergleichen bedienbar ist. Ferner ist die Umschalteinheit 9 vorzugsweise mit einer Elektronik ausgestattet, die Automatikfunktionen wie eine Zeitsteuerung, eine Helligkeitssteuerung oder dergleichen bereitstellt.

Eine weitere Steigerung des Bedienkomforts lässt sich dadurch erreichen, dass die Umschalteinheit 9 ein nicht dargestelltes, elektronisches Funkmodul zur Kommunikation mit einer Funkfernsteuerung aufweist. Das Steuergerät 1 kann auch dafür ausgelegt sein, mit anderen Steuergeräten zu kommunizieren.

Nach einer weiteren Lehre, der ebenfalls eigenständige Bedeutung zukommt, wird eine Steuerung einer Antriebsanordnung 3, insbesondere einer Rohrmotoranordnung 3, für eine Verdunkelungsvorrichtung bzw. Sicherungsvorrichtung beansprucht.

Die Antriebsanordnung nach dieser weiteren Lehre weist einen an Netzwechselspannung betreibbaren Asynchron-Antriebsmotor 4 mit Betriebskondensator 5 zur Erzeugung von Haupt- und Hilfsphase auf, wobei eine elektronische Auswerteeinheit 10 vorgesehen ist, die aus der Hilfsphasenspannung U_{Hilfs} und gegebenenfalls der Hauptphasenspannung U_{Haupt} einen Drehmomentwert für das vom Antriebsmotor 4 abgegebene Drehmoment ermittelt und bei Abweichung von einem vorbestimmten Verhalten des Drehmomentwerts eine Kollisionsroutine auslöst. Ein Gehäuse 8 und eine Umschalteinheit 9 können grundsätzlich vorgesehen sein, ist für diese weitere Lehre aber nicht ausschlaggebend.

Wesentlich ist nach dieser weiteren Lehre, dass die Auswerteeinheit 10 periodisch einen ersten Flächenwert Aₙ über eine Halbwelle der Hauptphasenspannung U_{Haupt} und einen zweiten Flächenwert aₙ über die dazugehörige, phasenverschobene Halbwelle der Hilfsphasenspannung U_{Hilfs} ermittelt und aus den beiden Flächenwerten Aₙ, aₙ den Drehmomentwert ermittelt.

Abgesehen von dem nicht notwendigerweise vorgesehenen Gehäuse 8 und der nicht notwendigerweise vorgesehenen Umschalteinheit 9 entspricht die Steuerung hinsichtlich ihres Aufbaus exakt dem vorschlagsgemäßen Steuergerät 1. Auf alle Ausführungen zu dem Steuergerät 1 darf insoweit verwiesen werden.

Bei der Ausgestaltung der Antriebsanordnung 3 als Rohrmotoranordnung 3 ist es vorzugsweise vorgesehen, dass die Steuerung in die Rohrmotoranordnung 3 integriert ist. Grundsätzlich ist hier aber auch eine drahtgebundene Fernbedienung der Rohrmotoranordnung denkbar.

Schließlich darf noch darauf hingewiesen werden, dass alternativ zu der oben angebenenen Bildung der Differenz des ersten Flächenwerts Aₙ von dem zweiten Flächenwert aₙ (Fig. 3) die Division des ersten Flächenwerts Aₙ durch zweiten Flächenwert aₙ (oder umgekehrt) ein Maß für den in Rede stehenden Drehmomentwert bilden kann. Dies hat sich in Versuchen als besonders vorteilhaft herausgestellt.

## Patentansprüche

1. Steuergerät (1) zur Hausinstallation für die drahtgebundene Fernsteuerung der Antriebsanordnung (3), insbesondere der Rohrmotoranordnung (3), einer Verdunkelungsvorrichtung bzw. Sicherungsvorrichtung, wobei die Antriebsanordnung (3) einen an Netzwechselspannung betreibbaren Asynchron-Antriebsmotor (4) mit Betriebskondensator (5) zur Erzeugung von Haupt- und Hilfsphase aufweist, wobei im installierten Zustand das Steuergerät (1) insbesondere mit der Netzwechselspannung und der Antriebsmotor (4) jedenfalls mit seinen beiden Phasenklemmen (6, 7) mit dem Steuergerät (1) verbunden ist, wobei das Steuergerät (1) ein Gehäuse (8) und in dem Gehäuse (8) eine elektronische Umschalteinheit (9) aufweist und die Umschalteinheit (9) den Phasenleiter (L1) der Netzwechselspannung je nach gewünschter Verstellrichtung auf eine der beiden Phasenklemmen (6, 7) des Antriebsmotors (4) durchschaltet,
**dadurch gekennzeichnet,**
**dass** die Umschalteinheit (9) eine elektronische Auswerteeinheit (10) aufweist, die aus der Hilfsphasenspannung (U_{Hilfs}) und der Hauptphasenspannung (U_{Haupt}) einen Drehmomentwert für das vom Antriebsmotor (4) abgegebene Drehmoment ermittelt und bei Abweichung von einem vorbestimmten Verhalten des Drehmomentwerts eine Kollisionsroutine auslöst und dass die Auswerteeinheit (10) periodisch einen ersten Flächenwert (Aₙ) über eine Halbwelle der Hauptphasenspannung (U_{Haupt}) und einen zweiten Flächenwert (aₙ) über die dazugehörige, phasenverschobene Halbwelle der Hilfsphasenspannung (U_{Hilfs}) ermittelt und aus den beiden Flächenwerten (Aₙ, aₙ) den Drehmomentwert ermittelt.

2. Steuergerät nach Anspruch 1, **dadurch gekennzeichnet, dass** das Durchlaufen der Kollisionsroutine jedenfalls ein Abschalten des Antriebsmotors (4) und gegebenenfalls eine zumindest geringfügige Rückstellung des Antriebsmotors (4) bewirkt.

3. Steuergerät nach Anspruch 1 oder 2, **dadurch gekennzeichnet, dass** die Auswerteeinheit (10) den ersten Flächenwert (Aₙ) von dem zweiten Flächenwert (aₙ) subtrahiert und diese Differenz zur Ermittlung des Drehmomentwerts auf den ersten. Flächenwert (Aₙ) normiert.

4. Steuergerät nach einem der vorhergehenden Ansprüche, **dadurch gekennzeichnet, dass** die Auswerteeinheit (10) einen ggf. mehrstufigen Filter zur Erzengung eines insbesondere gleitenden Mittelwert des Drehmomentwerts aufweist, vorzugsweise, dass die Auswerteeinheit (10) bei einer vorbestimmten Abweichung des Drehmomentwerts von dem erzeugten Mittelwert die Kollisionsroutine auslöst.

5. Steuergerät nach Anspruch 4, **dadurch gekennzeichnet, dass** die Auswerteeinheit (10) bei einer vorbestimmten Änderung des Mittelwerts, ggf. bezogen auf einen vorbestimmten Zeitraum, die Kollisionsroutine auslöst.

6. Steuergerät nach Anspruch 3 und ggf. Anspruch 4 oder 5, **dadurch gekennzeichnet, dass** die Auswerteeinheit (10) bei Absinken des zweiten Flächenwerts (aₙ) unter den ersten Flächenwert (Aₙ) die Kollisionsroutine auslöst.

7. Steuergerät nach einem der vorhergehenden Ansprüche, **dadurch gekennzeichnet, dass** das Steuergerät (I) in einer Norm-Unterputzdose installierbar ist.

8. Steuergerät nach einem der vorhergehenden Ansprüche, **dadurch gekennzeichnet, dass** die Umschalteinheit (9) Automatikfunktionen wie Zeitsteuerung Helligkeitssteuerung oder dergleichen bereitstellt.

9. Steuergerät nach einem der vorhergehenden Ansprüche, **dadurch gekennzeichnet, dass** die Umschalteinheit (9) ein elektronisches Funkmodul zur Kommunikation mit einer Funkfernsteuerung aufweist.

10. Steuerung einer Antriebsanordnung (3), insbesondere einer Rohrmotoranordnung (3), für eine Verdunkelungsvorrichtung bzw. Sicherungsvorrichtung, wobei die Antriebsanordnung (3) einen an Netzwechselspannung betreibbaren Asynchron-Antriebsmotor (4) mit Betriebskondensator (5) zur Erzeugung von Haupt- und Hilfsphase aufweist, wobei eine elektronische Auswerteeinheit (10) vorgesehen ist, die aus der Hilfsphasenspannung (U_{Hilfs}) und der Hauptphasenspannung (U_{Haupt}) einen Drehmomentwert für das vom Antriebsmotor (4) abgegebene Drehmoment ermittelt und bei Abweichung von einem vorbestimmten Verhalten des Drehmomentwerts eine Kollisionsroutine auslöst,
**dadurch gekennzeichnet,**
**dass** die Auswerteeinheit (10) periodisch einen ersten Flächenwert (Aₙ) über eine Halbwelle der Hauptphasenspannung und einen zweiten Flächenwert (aₙ) über die dazugehörige, phasenverschobene Halbwelle der Hilfsphasenspannung (U_{Hilfs}) ermittelt und aus den beiden Flächenwerten (Aₙ, aₙ) den Drehmomentwert ermittelt.

11. Steuerung nach Anspruch 10, **dadurch gekennzeichnet, dass** die Steuerung (1) in die Antriebsanordnung (3), insbesondere in die Rohrmotoranordnung (3), integriert ist.

## Claims

1. Controller (1) for domestic installation for the wired remote control of the drive arrangement (3), in particular of the tubular motor arrangement (3), of a shading device or fuse device, the drive arrangement (3) having an asynchronous drive motor (4) which can be operated on AC supply voltage and has a running capacitor (5) for generating main phase and auxiliary phase, in the installed state the controller (1) being connected, in particular, to the AC supply voltage, and the drive motor (4) being connected, in any event with its two line terminals (6, 7), to the controller (1), the controller (1) having a housing (8) and an electronic switchover unit (9) in the housing (8), and the switchover unit (9) switching through the phase conductor (L1) of the AC supply voltage to one of the two line terminals (6, 7) of the drive motor (4) depending on the desired adjustment direction, **characterized in that** the switchover unit (9) has an electronic evaluation unit (10) which uses the auxiliary phase voltage (U_{Hilfe}) and the main phase voltage (U_{Haupt}) to determine a torque value for the torque output by the drive motor (4), and initiates a collision routine given a deviation from a predetermined behaviour of the torque value, and **in that** the evaluation unit (10) periodically determines a first area value (Aₙ) over a half wave of the main phase voltage (U_{Haupt}) and a second area value (aₙ) over the associated, phase-shifted half wave of the auxiliary phase voltage (U_{Hilfs}), and determines the torque value from the two area values (Aₙ, aₙ).

2. Controller according to Claim 1, **characterized in that** running the collision routine in any event effects a shutdown of the drive motor (4) and, as the case may be, an at least slight resetting of the drive motor (4).

3. Controller according to Claim 1 or 2, **characterized in that** the evaluation unit (10) subtracts the first area value (Aₙ) from the second area value (aₙ) and normalizes said difference in relation to the first area value (Aₙ) in order to determine the torque value.

4. Controller according to one of the preceding claims, **characterized in that** the evaluation unit (10) has an, as the case may be, multistage filter for producing an, in particular sliding, mean value of the torque value, preferably that the evaluation unit (10) initiates the collision routine in the event of a predetermined deviation of the torque value from the generated mean value.

5. Controller according to Claim 4, **characterized in that** the evaluation unit (10) initiates the collision routine in the event of a predetermined change in the average value based, as the case may be, on a predetermined period of time.

6. Controller according to Claim 3 and, as the case may be, Claim 4 or 5, **characterized in that** the evaluation unit (10) initiates the collision routine when the second area value (aₙ) falls below the first area value (Aₙ).

7. Controller according to one of the preceding claim, **characterised in that** the controller (1) can be installed in a standard flush-type box.

8. Controller according to one of the preceding claims, **characterized in that** the switchover unit (9) provides automatic functions such as time control, brightness control or the like.

9. Controller according to one of the preceding claims, **characterized in that** the switchover unit (9) has an electronic radio module for communicating with a radio remote control.

10. Control of a drive arrangement (3), in particular of a tubular motor arrangement (3), for a shading device or fuse device, the drive arrangement (3) having an asynchronous drive motor (4) which can be operated on AC supply voltage and has a running capacitor (5) for generating main phase and auxiliary phase, an electronic evaluation unit (10) being provided which uses the auxiliary phase voltage (H_{Hilfs}) and the main phase voltage (U_{Haupt}) to determine a torque value for the torque output by the drive motor (4), and initiates a collision routine given a deviation from a predetermined behaviour of the torque value, **characterized in that** the evaluation unit (10) periodically determines a first area value (Aₙ) over a half wave of the main phase voltage and a second area value (aₙ) over the associated, phase-shifted half wave of the auxiliary phase voltage (U_{Hilfs}), and determines the torque value from the two area values (Aₙ, aₙ).

11. Control according to Claim 10, **characterized in that** the controller (1) is integrated in the drive arrangement (3), in particular in the tubular motor arrangement (3).

## Revendications

1. Appareil de commande (1) d'installation de maison pour la télécommande filaire d'un agencement d'entraînement (3), notamment de l'agencement de moteur tubulaire (3), d'un dispositif d'obscurcissement et/ou dispositif de sécurisation, l'agencement d'entraînement (3) comportant un moteur d'entraînement asynchrone (4) pouvant être entraîné avec une tension de réseau alternative, avec un condensateur opérationnel (5) pour produire une phase principale et auxiliaire, l'appareil de commande (1) étant notamment relié, à l'état installé, à la tension de réseau alternative et le moteur d'entraînement (4) étant toujours relié, avec ses deux bornes de phases (6, 7), à l'appareil de commande (1), l'appareil de commande (1) comportant un carter (8) et une unité de commutation électronique (9) dans le carter (8) et l'unité de commutation (9) connectant le conducteur de phase (L1) de la tension de réseau alternative respectivement, selon une direction de déplacement souhaitée, sur une des deux bornes de phases (6, 7) du moteur d'entraînement (4) ; **caractérisé en ce que** :
l'unité de commutation (9) comporte une unité d'analyse électronique (10) déterminant à partir de la tension de phase auxiliaire (U_{Hilfs}) et de la tension de phase principale (U_{Haupt}) une valeur de couple de rotation pour le couple de rotation transmis par le moteur d'entraînement (4) et en cas d'écart par rapport à un comportement prédéfini de la valeur de couple de rotation, déclenche un sous-programme de collision et que l'unité d'analyse (10) détermine périodiquement une première valeur de surface (Aₙ) via une demi-onde de la tension de phase principale (U_{Haupt}) et une deuxième valeur de surface (aₙ) via la demi-onde en décalage de phase correspondante de la tension de phase auxiliaire (U_{Hilfs}) et calcule la valeur de couple de rotation à partir des deux valeurs de surface (Aₙ, aₙ).

2. Appareil de commande selon la revendication 1, **caractérisé en ce que** le passage du sous-programme de collision déclenche à chaque fois une déconnexion du moteur d'entraînement (4) et le cas échéant un réarmement au moins limité du moteur d'entraînement (4).

3. Appareil de commande selon la revendication 1 ou 2, **caractérisé en ce que** l'unité d'analyse (10) soustrait la première valeur de surface (Aₙ) de la deuxième valeur de surface (aₙ) et norme cette différence pour calculer la valeur de couple de rotation sur la première valeur de surface (Aₙ).

4. Appareil de commande selon l'une quelconque des revendications précédente, **caractérisé en ce que** l'unité d'analyse (10) comporte un filtre le cas échéant à plusieurs paliers pour produire une valeur moyenne notamment glissante de la valeur de couple de rotation, de préférence que l'unité d'analyse (10) déclenche le sous-programme de collision en cas d'écart prédéfini de la valeur de couple de rotation par rapport à la valeur moyenne produite.

5. Appareil de commande selon la revendication 4, **caractérisé en ce que** l'unité d'analyse (10) déclenche le sous-programme de collision en cas de variation prédéfinie de la valeur moyenne, le cas échéant par rapport à une durée prédéfinie.

6. Appareil de commande selon la revendication 3 et le cas échéant la revendication 4 ou 5, **caractérisé en ce que** l'unité d'analyse (10) déclenche le sous-programme de collision en cas de passage de la deuxième valeur de surface (aₙ) en dessous de la première valeur de surface (Aₙ).

7. Appareil de commande selon l'une quelconque des revendications précédentes, **caractérisé en ce que** l'appareil de commande (1) peut êtrs installé dans un boîtier encastré normalisé.

8. Appareil de commande selon l'une quelconque des revendications précédentes, **caractérisé en ce que** l'unité de commutation (9) met à disposition des fonctions automatiques telles que la commande de durée, la commande de clarté ou leur équivalent.

9. Appareil de commande selon l'une quelconque des revendications précédentes, **caractérisé en ce que** l'unité de commutation (9) comporte un module radio électronique servant à communiquer avec une télécommande radio.

10. Commande d'un agencement d'entraînement (3), notamment d'un agencement de moteur tubulaire (3), d'un dispositif d'obscurcissement et/ou dispositif de sécurisation, l'agencement d'entraînement (3) comportant un moteur d'entraînement asynchrone (4) pouvant être entraîné avec une tension de réseau alternative, avec un condensateur opérationnel (5) pour produire une phase principale et auxiliaire, une unité d'analyse électronique (10) étant prévue qui détermine à partir de la tension de phase auxiliaire (U_{Hilfs}) et de la tension de phase principale (U_{Haupt}) une valeur de couple de rotation pour le couple de rotation transmis par le moteur d'entraînement (4) et en cas d'écart par rapport à un comportement prédéfini de la valeur de couple de rotation, déclenche un sous-programme de collision ;
**caractérisée en ce que** :
l'unité d'analyse (10) détermine périodiquement une première valeur de surface (Aₙ) via une demi-onde de la tension de phase principale et une deuxième valeur de surface (aₙ) via la demi-onde en décalage de phase correspondante de la tension de phase auxiliaire (U_{Hilfs}) et calcule la valeur de couple de rotation à partir des deux valeurs de surface (Aₙ, aₙ).

11. Commande selon la revendication 10, **caractérisée en ce que** la commande (1) est intégrée dans l'agencement d'entraînement (3), notamment dans l'agencement de moteur tubulaire (3).
